# EUROPÄISCHE PATENTSCHRIFT

(11) **EP 3 220 561 B1**
(45) Veröffentlichungstag und Bekanntmachung des Hinweises auf die Patenterteilung: **05.05.2021**
(21) Anmeldenummer: 17160181.8
(22) Anmeldetag: 09.03.2017
(51) Int. Cl.: H04J 3/06, G05B 19/042, H04L 12/26, G05B 9/02

(54) **VORRICHTUNG UND VERFAHREN ZUM STEUERN EINER AUTOMATISIERTEN ANLAGE**
DEVICE AND METHOD FOR CONTROLLING AN AUTOMATED SYSTEM
DISPOSITIF ET PROCÉDÉ DE COMMANDE D'UNE INSTALLATION AUTOMATISÉE

(30) Priorität: 15.03.2016 DE 102016104767
(43) Veröffentlichungstag der Anmeldung: 20.09.2017
(73) Patentinhaber: Pilz GmbH & Co. KG, 73760 Ostfildern (DE)
(72) Erfinder: Bauknecht, Jochen, 73760 Ostfildern (DE); Klamser, Oliver, 73760 Ostfildern (DE); Sperrer, Reinhard, 73760 Ostfildern (DE); Dr. Wöhrle, Stefan, 73760 Ostfildern (DE)
(74) Vertreter: Witte, Weller & Partner Patentanwälte mbB

(56) Entgegenhaltungen:
- DE-A1- 4 215 380
- US-A1- 2003 117 899
- US-A1- 2010 166 022
- US-B2- 7 366 774

## Beschreibung

Die vorliegende Erfindung betrifft eine Vorrichtung und ein Verfahren zum Steuern einer automatisierten Anlage, insbesondere eine Vorrichtung und ein Verfahren mit einer zeitsynchronen Ausführung von sicherheitsrelevanten Steuerungsaufgaben in einer Anlage mit voneinander entfernten Steuerungsgeräten.

Es ist bekannt, verteilte Steuerungsgeräte in einer räumlich ausgedehnten Anlage mit lokalen Uhren auszurüsten, die miteinander synchronisiert werden. Die synchronisierten Uhren machen es möglich, Steuerungsaufgaben an verschiedenen Stellen der Anlage weitgehend zeitgleich auszuführen, etwa um mehrere koordinierte Bewegungen in einer Anlage mit mehreren Antriebsachsen zu bewirken. Beispielsweise beschreibt eine Internet-Publikation der Firma Beckhoff mit dem Titel "EtherCAT Distributed Clocks" das Prinzip von räumlich verteilten, miteinander synchronisierten Uhren in einem Steuerungssystem. In diesem System sendet ein Steuerungsgerät, das als EtherCAT-Master bezeichnet ist, in kurzen zeitlichen Abständen eine spezielle Synchronisationsnachricht, in die ein anderes Steuerungsgerät mit einer Referenzuhr seine aktuelle Uhrzeit einträgt. Die Synchronisationsnachricht wird von weiteren Steuerungsgeräten in dem System, den sogenannten EtherCAT-Slaves, gelesen, um die jeweilige lokale Uhrzeit auf die Referenzuhrzeit zu synchronisieren. Um Laufzeiten der Synchronisationsnachricht zu den verschiedenen Steuerungsgeräten zu berücksichtigen, wird für jedes beteiligte Steuerungsgerät außerdem eine sogenannte Offset-Messung durchgeführt und eine Offset-Zeit berechnet, die bei der Synchronisation der Uhren berücksichtigt wird.

Ein weiteres Verfahren zur Synchronisation von räumlich verteilten Uhren in einer automatisierten Anlage ist in einer Publikation der Firma Hirschmann mit dem Titel "White Paper - Precision Clock Synchronization" unter Bezugnahme auf den IEEE-Standard 1588 beschrieben. Nach diesem Verfahren versendet ein sogenannter Master zyklisch Synchronisationsnachrichten über ein Kommunikationsnetzwerk an die angeschlossenen Slaves. Zugleich erfasst der Master die Absendezeit einer jeden Synchronisationsnachricht so genau wie möglich, und er versendet die erfasste Absendezeit mit einer weiteren Nachricht an die angeschlossenen Slaves. Die Slaves messen jeweils die Ankunftszeit dieser beiden Nachrichten so genau wie möglich und können anhand dieser Informationen einen Korrekturwert bestimmen, mit dem die jeweilige lokale Uhr im Slave auf die Uhrzeit des Masters angepasst wird. Dies ist die sogenannte Offsetkorrektur. In einer weiteren Phase der Synchronisation messen die Slaves die Laufzeit einer Nachricht zum Master und zurück durch Versenden einer Anfrage und Empfangen einer Antwortnachricht. Anschließend werden die jeweiligen lokalen Uhren um die individuelle Laufzeit zum Master nachgestellt.

US 2010/0166022 A1 offenbart ein auf EtherCAT basierendes Steuerungssystem, wobei eine ausfallsichere Synchronisation zwischen verteilten Steuergeräten erreicht werden soll, indem zwei Synchronisationssignale bereitgestellt werden. Im Fehlerfall wird eines der beiden Synchronisationssignale ausgewählt.

US 2003/0117899 A1 offenbart ein verteiltes System, in dem die Uhren von sogenannten Slaves durch einen Master synchronisiert sind und zusätzlich ein Triggersignal bereitgestellt wird, dessen Ankunftszeit am jeweiligen Slave bestimmt wird. Aus der Sendezeit des Triggers und der Ankunftszeit am Slave wird eine Korrektur der lokalen Zeit bestimmt.

Ein weiteres Verfahren zur zeitlichen Synchronisation von Teilnehmern eines Netzwerks ist in DE 10 2005 032 877 A1 beschrieben. Im Unterschied zu dem Verfahren der IEEE 1588 geht die Initiative für die Zeitsynchronisation hier stets von einem Nachrichtenempfänger aus. DE 10 2005 032 877 A1 schlägt die Anwendung dieses Synchronisationsverfahrens insbesondere für ein Netzwerk vor, über das sicherheitsrelevante Steuerungsinformationen ausgetauscht werden, wie etwa die Übertragung von Informationen, die den Betriebszustand eines Not-Aus-Gerätes repräsentieren. Derartige sicherheitsrelevante Steuerungsfunktionen erfordern ein definiertes Zeitverhalten, um etwa die Reaktionszeit zwischen dem Betätigen eines Not-Aus-Tasters und dem Stillsetzen eines gefährlichen Antriebs zu garantieren.

EP 1 521 145 A1 beschreibt eine Sicherheitssteuerung mit einer Überwachung der sicherheitsrelevanten Reaktionszeit, die den räumlichen Abstand bestimmt, in dem eine Lichtschranke von einer gefährlichen Presse entfernt sein muss, um einen sicheren Halt des Pressenwerkzeugs nach Durchbrechen der Lichtschranke zu ermöglichen, bevor es zu einer Verletzung kommen kann. Die Sicherheitssteuerung kann mit synchronisierten Uhren in räumlich verteilten Ein-/Ausgabe-Modulen arbeiten und zwei räumlich voneinander getrennte Module tauschen Nachrichten mit Zeitstempeln aus, so dass das jeweilige Empfängermodul die Nachrichtenlaufzeiten bestimmen kann.

US 7,366,774 B2 und DE 10 2008 007 672 A1 beschreiben weitere Vorrichtungen mit räumlich verteilten Steuerungsgeräten, die sicherheitsrelevante Steuerungsaufgaben ausführen. Diese Vorrichtungen verzichten auf die Synchronisierung von lokalen Uhren angesichts des damit verbundenen Aufwandes. Stattdessen überwachen diese Vorrichtungen Nachrichtenlaufzeiten innerhalb des Kommunikationsnetzwerkes und die jeweiligen Nachrichtenempfänger besitzen eine sogenannte Zeiterwartung, bis zu der eine jeweils aktuelle Steuernachricht empfangen werden muss, um einen fehlersicheren Betrieb der Anlage zu garantieren. US 7,366,774 B2 offenbart in diesem Zusammenhang ein erstes Steuergerät mit einer ersten lokalen Uhr und ein zweites Steuergerät mit einer zweiten lokalen Uhr. Die Steuergeräte können im Rahmen eines sogenannten Multicasting jeweils eine Triggernachricht von einem Zeitgeber empfangen.

Die Verwendung von synchronen Uhren in verteilten Steuerungsgeräten bietet unbestreitbare Vorteile, wenn es um die zeitliche Koordination von Steuerungsaufgaben geht. Sie birgt jedoch Risiken, wenn der gefahrlose Betrieb einer Anlage (im Sinne der einschlägigen Normen zur Maschinensicherheit, insbesondere EN 61508, EN 62061 und/oder ISO 13849-1) maßgeblich von der Synchronisation abhängt. Eine fehlersichere Synchronisation von verteilten Uhren in einem Steuerungssystem mit sicherheitsrelevanten Aufgaben ist bisher nicht bekannt, weshalb sicherheitsrelevante Steuerungsaufgaben in aller Regel nicht oder zumindest nicht maßgeblich von einer Uhrensynchronisation abhängen. Dies führt dazu, dass Sicherheitsabstände zu gefährlichen Anlagenteilen eher großzügig gewählt werden müssen, was im Hinblick auf die Kosten und die Effizienz einer Anlage nachteilig sein kann.

Vor diesem Hintergrund ist es eine Aufgabe der vorliegenden Erfindung, eine Vorrichtung und ein Verfahren der eingangs genannten Art anzugeben, die verkürzte sicherheitsrelevante Reaktionszeiten - und daraus folgend verkürzte Sicherheitsabstände zu gefährlichen Anlagenteilen - in einer Anlage mit einer Vielzahl von räumlich verteilten Steuerungsgeräten ermöglichen.

Gemäß einem ersten Aspekt der Erfindung wird diese Aufgabe durch eine Vorrichtung der eingangs genannten Art gelöst, mit einer Vielzahl von räumlich verteilten Steuerungsgeräten, die über ein Kommunikationsnetzwerk miteinander verbunden sind und zumindest ein erstes Steuerungsgerät und ein zweites Steuerungsgerät beinhalten, und mit einem Zeitgeber, wobei das erste Steuerungsgerät eine erste lokale Uhr besitzt und zyklisch eine Anzahl von ersten Steuerungsaufgaben ausführt, mit denen zumindest ein erster lokaler Aktor angesteuert wird, wobei das zweite Steuerungsgerät eine zweite lokale Uhr besitzt und zyklisch eine Anzahl von zweiten Steuerungsaufgaben ausführt, mit denen zumindest ein zweiter lokaler Aktor angesteuert wird, wobei das erste und das zweite Steuerungsgerät jeweils einen Synchronisationsdienst besitzen, mit dem die jeweilige lokale Uhr auf eine gemeinsame Referenzuhr synchronisiert wird, wobei der Zeitgeber wiederholt eine Triggernachricht an das erste und das zweite Steuerungsgerät versendet, wobei das erste Steuerungsgerät beim Empfang der Triggernachricht eine erste Lokalzeit bestimmt und an das zweite Steuerungsgerät versendet, wobei das zweite Steuerungsgerät beim Empfang der Triggernachricht eine zweite Lokalzeit bestimmt und an das erste Steuerungsgerät versendet, wobei das erste und das zweite Steuerungsgerät jeweils eine Differenz zwischen der ersten und der zweiten Lokalzeit bestimmen, und wobei das erste Steuerungsgerät den ersten lokalen Aktor in Abhängigkeit von der Differenz ansteuert und das zweite Steuerungsgerät den zweiten lokalen Aktor in Abhängigkeit von der Differenz ansteuert.

Gemäß einem weiteren Aspekt der Erfindung wird diese Aufgabe durch ein Verfahren zum Steuern einer automatisierten Anlage gelöst, wobei die Anlage einen Zeitgeber und eine Vielzahl von räumlich verteilten Steuerungsgeräten besitzt, die über ein Kommunikationsnetzwerk miteinander verbunden sind und zumindest ein erstes Steuerungsgerät und ein zweites Steuerungsgerät beinhalten, wobei das erste Steuerungsgerät eine erste lokale Uhr besitzt und zyklisch eine Anzahl von ersten Steuerungsaufgaben ausführt, mit denen zumindest ein erster lokaler Aktor angesteuert wird, wobei das zweite Steuerungsgerät eine zweite lokale Uhr besitzt und zyklisch eine Anzahl von zweiten Steuerungsaufgaben ausführt, mit denen zumindest ein zweiter lokaler Aktor angesteuert wird, wobei das erste und das zweite Steuerungsgerät jeweils einen Synchronisationsdienst besitzen, mit dem die jeweilige lokale Uhr auf eine gemeinsame Referenzuhr synchronisiert wird, und wobei der Zeitgeber wiederholt eine Triggernachricht an das erste und das zweite Steuerungsgerät versendet, mit den Schritten:
- das erste Steuerungsgerät bestimmt beim Empfang der Triggernachricht eine erste Lokalzeit und versendet diese an das zweite Steuerungsgerät,
- das zweite Steuerungsgerät bestimmt beim Empfang der Triggernachricht eine zweite Lokalzeit und versendet diese an das erste Steuerungsgerät,
- das erste und das zweite Steuerungsgerät bestimmen jeweils eine Differenz zwischen der ersten und der zweiten Lokalzeit, und
- das erste Steuerungsgerät steuert den ersten lokalen Aktor in Abhängigkeit von der Differenz an und das zweite Steuerungsgerät steuert den zweiten lokalen Aktor in Abhängigkeit von der Differenz an.

Die neue Vorrichtung und das entsprechende Verfahren nutzen die an sich bekannte Technologie, lokale Uhren in räumlich verteilten Steuerungsgeräten zu synchronisieren, um auf diese Weise eine (zumindest im Rahmen der technisch bedingten Toleranzen) zeitgleiche Ausführung von Steuerungsaufgaben unabhängig vom Ort der Ausführung zu ermöglichen. Dementsprechend hängen die ersten Steuerungsaufgaben in den bevorzugten Ausführungsbeispielen von der lokalen ersten Uhr ab bzw. werden die ersten Steuerungsaufgaben in Abhängigkeit von der ersten lokalen Uhr ausgeführt, und die zweiten Steuerungsaufgaben hängen in den bevorzugten Ausführungsbeispielen von der lokalen zweiten Uhr ab bzw. werden in Abhängigkeit von der zweiten lokalen Uhr ausgeführt. Vorteilhaft führen das erste und das zweite Steuerungsgerät die ersten bzw. zweiten Steuerungsaufgaben zeitsynchron aus.

Darüber hinaus überwachen das erste und das zweite Steuerungsgerät miteinander die Uhrensynchronisation, indem jedes der beiden Steuerungsgeräte eine Differenz zwischen der ersten Lokalzeit des ersten Steuerungsgeräts und der zweiten Lokalzeit des zweiten Steuerungsgeräts bestimmt und in Abhängigkeit davon zumindest einen jeweiligen lokalen Aktor ansteuert. Die Bestimmung der jeweiligen Lokalzeit wird durch einen gemeinsamen Zeitgeber getriggert. Laufen die lokalen Uhren zu weit auseinander, kann jedes der beiden genannten Steuerungsgeräte diesen Fehler anhand der Differenz erkennen und den zumindest einen lokalen Aktor in Abhängigkeit davon ansteuern, insbesondere abschalten.

Die Bestimmung der Differenz erfolgt hier in zwei separaten Kanälen, nämlich im ersten Steuerungsgerät und im zweiten Steuerungsgerät. Die Vorrichtung und das Verfahren erreichen somit auf sehr kostengünstige Weise eine Redundanz, die im Hinblick auf sicherheitsrelevante Steuerungsfunktionen wünschenswert ist. Die Redundanz macht es leichter möglich, dass der Zeitgeber - wie in bevorzugten Ausführungsbeispielen - nicht-fehlersicher im Sinne der einschlägigen Normen zur Maschinensicherheit ausgebildet ist, also beispielsweise nicht-fehlersicher im Sinne der SIL2 gemäß IEC 61508 und/oder nicht-fehlersicher im Sinne PL d gemäß ISO 13849-1. Dies ist im Hinblick auf die Kosten sehr vorteilhaft, da der Nachweis einer fehlersicheren Realisierung für jede Komponente eines Steuerungssystems aufwendig und teuer ist.

Besonders vorteilhaft ist es, wenn weder das erste Steuerungsgerät noch das zweite Steuerungsgerät eine Referenzuhr besitzen, auf die die jeweiligen lokalen Uhren synchronisiert werden, weil die sichere Überwachung der Uhrensynchronisation damit sehr flexibel auf viele Steuerungsgeräte einer großen Anlage verteilt werden kann, ohne dass es darauf ankommt, wie die jeweiligen lokalen Uhren miteinander synchronisiert werden. Beispielsweise kann die Uhrensynchronisation nach IEEE 1588 erfolgen, aber auch nach einem anderen geeigneten Verfahren.

Die neue Vorrichtung und das neue Verfahren ermöglichen auf sehr einfache und kostengünstige Weise eine fehlersichere Zeitsynchronität von räumlich verteilten Steuerungsaufgaben, die zudem weitgehend unabhängig ist von der zugrunde liegenden Netzwerkstruktur und den verwendeten Kommunikationsprotokollen. Infolgedessen können die neue Vorrichtung und das neue Verfahren anstelle oder in Ergänzung zu bekannten Verfahren der Zeitüberwachung bei sicherheitsrelevanten Steuerungsaufgaben eingesetzt werden. Die neue Vorrichtung und das neue Verfahren erhöhen die Fehlersicherheit in Bezug auf garantierte Reaktionszeiten und erlauben damit eine Minimierung von Sicherheitsabständen. Die oben genannte Aufgabe ist daher vollständig gelöst.

In einer bevorzugten Ausgestaltung der Erfindung ist der Zeitgeber räumlich getrennt von dem ersten und dem zweiten Steuerungsgerät an das Kommunikationsnetzwerk angeschlossen.

In dieser Ausgestaltung sind das erste und das zweite Steuerungsgerät in Bezug auf den Zeitgeber gleichgestellt. Der Zeitgeber kann folglich "irgendwo" innerhalb des Systems angeordnet sein. Die Ausgestaltung bietet eine große Flexibilität und vereinfacht die Planung der neuen Vorrichtung bzw. des entsprechenden Verfahrens und gegebenenfalls die Nachrüstung in bestehenden Anlagen. In einigen Ausführungsbeispielen ist der Zeitgeber auch separat von dem Steuerungsgerät an das Kommunikationsnetzwerk angeschlossen, welches die Referenzuhr aufweist. Dies vereinfacht die praktische Realisierung noch weiter.

In einigen Ausgestaltungen können das erste und/oder zweite Steuerungsgerät bidirektional mit dem Zeitgeber über das Kommunikationsnetzwerk kommunizieren. Dies ist vorteilhaft, damit das jeweilige Steuerungsgerät die Nachrichtenlaufzeit der Triggernachricht vom Zeitgeber zum Steuergerät durch Versenden einer Anforderungsnachricht und Empfangen einer zugehörigen Antwort vom Zeitgeber individuell bestimmen kann. Der Zeitgeber ist hier vorteilhaft in einem Steuerungsgerät implementiert, das an dem "normalen" und vorteilhaft zyklischen Datenverkehr in dem Kommunikationsnetzwerk teilnimmt.

In anderen Ausgestaltungen kann der Zeitgeber nur unidirektional mit dem ersten und zweiten Steuerungsgerät kommunizieren, indem er die Triggernachricht versendet. Er kann jedoch keine Nachrichten vom ersten und/oder zweiten Steuerungsgerät empfangen. In einigen Ausführungsbeispielen kann die Triggernachricht ein drahtlos übertragenes Signal (Funksignal) sein, selbst wenn die weiteren Nachrichten zwischen dem ersten und zweiten Steuerungsgerät einschließlich der jeweiligen Übertragung der Differenz drahtgebunden erfolgt. Prinzipiell könnte die Triggernachricht ein DCF 77 Signal eines allgemeinen Zeitgebers für Funkuhren oder ein vergleichbares Zeitzeichen sein.

In einer weiteren Ausgestaltung weist das erste Steuerungsgerät einen ersten Parameterspeicher auf, in dem ein erster Laufzeitparameter gespeichert ist, der eine erwartete Laufzeit der Triggernachricht von dem Zeitgeber zu dem ersten Steuerungsgerät repräsentiert, wobei das erste Steuerungsgerät die erste Lokalzeit als Differenz zwischen einer lokalen Triggernachrichtenempfangszeit (beim ersten Steuerungsgerät) und dem ersten Laufzeitparameter bestimmt. Bevorzugt besitzt auch das zweite Steuerungsgerät einen entsprechenden (zweiten) Parameterspeicher, in dem ein zweiter Laufzeitparameter gespeichert ist, der eine erwartete Laufzeit der Triggernachricht von dem Zeitgeber zu dem zweiten Steuerungsgerät repräsentiert, und das zweite Steuerungsgerät bestimmt die zweite Lokalzeit als Differenz zwischen einer lokalen Triggernachrichtenempfangszeit beim zweiten Steuerungsgerät und dem zweiten Laufzeitparameter.

In dieser Ausgestaltung wird die für die Differenzbildung verwendete Lokalzeit um die jeweils erwartete Nachrichtenlaufzeit von dem Zeitgeber zu dem empfangenden Steuerungsgerät "bereinigt". Vorteilhaft gilt dies für jedes Steuerungsgerät, dessen lokale Uhr nach dem neuen Verfahren synchronisiert und überwacht wird. Die Ausgestaltung besitzt den Vorteil, dass sich die Überwachung auf die synchronisierten Uhren konzentriert und infolgedessen mit einer höheren Auflösung bzw. geringeren Toleranzen erfolgen kann.

In einer weiteren Ausgestaltung versetzt das erste Steuerungsgerät den ersten lokalen Aktor in einen fehlersicheren Zustand, wenn die Differenz einen vordefinierten Schwellenwert übersteigt. Vorteilhaft versetzt auch das zweite Steuerungsgerät den zweiten lokalen Aktor in einen fehlersicheren Zustand, wenn die Differenz einen vordefinierten Schwellenwert übersteigt.

Ein fehlersicherer Zustand im Sinne dieser Ausgestaltung ist ein definierter Zustand des jeweiligen Aktors, in dem die geringstmögliche Gefahr von der automatisierten Anlage in Bezug auf die Gesundheit oder das Leben von Bedienpersonen oder dergleichen ausgeht. Sehr häufig und dementsprechend bevorzugt entspricht der fehlersichere Zustand des Aktors einem Ruhezustand, in dem sich der Aktor befindet, wenn die automatisierte Anlage oder zumindest der Aktor stromlos oder anderweitig außer Betrieb gesetzt ist. In einigen bevorzugten Ausführungsbeispielen beinhaltet der jeweilige lokale Aktor einen oder mehrere elektromechanische Schaltkontakte, die im fehlersicheren Zustand geöffnet sind. Die Ausgestaltung sorgt dafür, dass die automatisierte Anlage oder zumindest ein Gefahr bringender Teil dieser Anlage in einen ungefährlichen Zustand gebracht wird, wenn die Synchronisation der jeweiligen lokalen Uhren nicht mehr innerhalb der durch den Schwellenwert definierten Toleranzen liegt. Infolgedessen trägt diese Ausgestaltung vorteilhaft dazu bei, sicherheitsrelevante Reaktionszeiten in der automatisierten Anlage zu garantieren.

In einer weiteren Ausgestaltung liest das erste Steuerungsgerät an zumindest einem lokalen Sensoreingang einen ersten Sensorzustand ein und versendet eine Prozessnachricht mit dem ersten Sensorzustand an das zweite Steuerungsgerät. Vorteilhaft steuert das zweite Steuerungsgerät den lokalen zweiten Aktor in Abhängigkeit von dem ersten Sensorzustand an. Des Weiteren ist es in einigen Ausführungsbeispielen bevorzugt, wenn das zweite Steuerungsgerät an zumindest einem lokalen zweiten Sensoreingang einen zweiten Sensorzustand einliest und eine zweite Prozessnachricht mit dem zweiten Sensorzustand an das erste Steuerungsgerät versendet, und wenn das erste Steuerungsgerät den ersten lokalen Aktor in Abhängigkeit von dem zweiten Sensorzustand ansteuert.

In dieser Ausgestaltung verarbeitet das zweite Steuerungsgerät Informationen von dem ersten Steuerungsgerät, um den zweiten lokalen Aktor anzusteuern. In einem solchen Fall ist die garantierte Uhrensynchronisation von besonderer Bedeutung, um einen sicheren Betrieb der Anlage mit minimalen Reaktionszeiten zu gewährleisten. Die Ausgestaltung ist besonders vorteilhaft, wenn die automatisierte Anlage eine Vielzahl von miteinander verbundenen, jedoch autonom arbeitsfähigen Anlagenteilen besitzt, wie dies beispielsweise bei modernen Produktionsstraßen in der Automobilindustrie der Fall ist. In einigen Ausführungsbeispielen steuert das erste Steuerungsgerät einen ersten Anlagenteil und das zweite Steuerungsgerät steuert einen separaten zweiten Anlagenteil, wobei ein vom ersten Anlagenteil gehandhabtes Werkstück an den zweiten Anlagenteil übergeben wird. Für die Optimierung der Arbeitsabläufe ist es in einem solchen Ausführungsbeispiel von Vorteil, wenn jedes Steuerungsgerät Informationen aus dem jeweils anderen Anlagenteil berücksichtigt. Allerdings hängt der optimale Steuerungsablauf in diesem Fall auch davon ab, dass die Uhrensynchronisation zwischen den Steuerungsteilen fehlerfrei erfolgt. Diese Voraussetzung wird mit der neuen Vorrichtung und dem entsprechenden Verfahren auf sehr vorteilhafte Weise erreicht.

In einer weiteren Ausgestaltung steuert das erste Steuerungsgerät einen weiteren Aktor, der lokal an das erste Steuerungsgerät angeschlossen ist, unabhängig von der Differenz an. Vorteilhaft steuert auch das zweite Steuerungsgerät einen weiteren Aktor, der lokal an das zweite Steuerungsgerät angeschlossen ist, unabhängig von der Differenz an

In dieser Ausgestaltung ist das erste Steuerungsgerät in der Lage, teilweise autark zu arbeiten, d. h. unabhängig von dem zweiten Steuerungsgerät und somit unabhängig von der Uhrensynchronisation. Die Ausgestaltung besitzt den Vorteil, dass der autarke Steuerungsteil weiterhin Steuerungsaufgaben ausführen kann, selbst wenn die Uhrensynchronisation fehlerhaft ist. Die Ausgestaltung ermöglicht einen sehr effizienten und trotzdem fehlersicheren Anlagenbetrieb.

In einer weiteren Ausgestaltung besitzt das zweite Steuerungsgerät einen (zweiten) Uhrensteuerkreis, der die zweite lokale Uhr in Abhängigkeit von der Differenz verlangsamt oder beschleunigt, wenn die Differenz einen vordefinierten Schwellenwert übersteigt. Vorteilhaft besitzt auch das erste Steuerungsgerät einen entsprechenden (ersten) Uhrensteuerkreis, der die erste Uhr in Abhängigkeit von der Differenz beschleunigt oder verlangsamt, insbesondere gegenläufig zu der lokalen Uhr im zweiten Steuerungsgerät.

In dieser Ausgestaltung sind das erste und/oder zweite Steuerungsgerät in der Lage, die jeweilige lokale Uhr nachzustellen, um die Uhrensynchronisation im Fehlerfall wieder herzustellen. Die Ausgestaltung ermöglicht eine schnelle und effiziente Wiederinbetriebnahme eines aufgrund von fehlerhafter Uhrensynchronisation abgeschalteten Anlagenteils. In einigen Ausführungsbeispielen ist es von Vorteil, wenn nur das zweite Steuerungsgerät oder nur das erste Steuerungsgerät den in dieser Ausgestaltung beschriebenen Uhrensteuerkreis besitzt, um ein eindeutiges Regelverhalten zu garantieren. In anderen Ausführungsbeispielen ist es von Vorteil, wenn das erste und das zweite Steuerungsgerät jeweils den beschriebenen Uhrensteuerkreis besitzen, um durch gegenläufige Regelungen eine besonders schnelle Wiederherstellung der Uhrensynchronisation zu erreichen.

In einer weiteren Ausgestaltung besitzt das zweite Steuerungsgerät eine zugesicherte lokale Zeittoleranz und der Uhrsteuerkreis verlangsamt oder beschleunigt die zweite lokale Uhr innerhalb der zugesicherten Zeittoleranz, bis die Differenz unter den vordefinierten Schwellenwert sinkt. In bevorzugten Ausgestaltungen gilt dies in entsprechender Weise für das erste Steuerungsgerät.

Die Ausgestaltung hat zur Folge, dass die Nachregelung der lokalen Uhr in dem zweiten Steuerungsgerät unter Umständen gezielt langsamer erfolgt als dies technisch möglich wäre. Infolgedessen nimmt diese Ausgestaltung in Kauf, dass die fehlerhafte Nicht-Synchronisation der lokalen Uhren länger bestehen bleibt als technisch notwendig. Der Vorteil liegt darin, die Einhaltung der lokalen Zeittoleranz in dem zweiten Steuerungsgerät zu garantieren. Die Ausgestaltung besitzt somit den Vorteil, dass die autark ablaufenden Steuerungsvorgänge mit der zugesicherten Zeittoleranz weiterlaufen können. Die Ausgestaltung ermöglicht einen sehr effizienten und fehlersicheren Anlagenbetrieb mit verteilten und vernetzten Steuerungsgeräten.

In einer weiteren Ausgestaltung synchronisiert der Uhrsteuerkreis die zweite lokale Uhr auf einen definierten Offset zu der Referenzuhr. Vorteilhaft gilt auch dies in entsprechender Weise für das erste Steuerungsgerät.

In dieser Ausgestaltung ist der Uhrsteuerkreis in dem zweiten Steuerungsgerät dazu ausgebildet, die Wieder-Synchronisation nur im Hinblick auf einen relativen Gleichlauf der zweiten lokalen Uhr auszuführen, nicht jedoch in Bezug auf einen absoluten Gleichlauf mit der Referenzuhr. Die Ausgestaltung besitzt den Vorteil, dass die Differenz relativ schnell wieder einen tolerierbaren Wert annimmt. Vorteilhaft ist das jeweilige Steuerungsgerät dazu ausgebildet, den definierten Schwellenwert in Abhängigkeit von dem Offset anzupassen. Die Ausgestaltung ermöglicht eine schnellere Rückkehr zu einem Betrieb der Steuerungsgeräte mit synchronisierten Uhren.

In einer weiteren Ausgestaltung führt das zweite Steuerungsgerät eine Vielzahl von zweiten Steuerungsaufgaben mit voneinander verschiedenen Zykluszeiten in Abhängigkeit von der zweiten lokalen Uhr zyklisch aus.

In dieser Ausgestaltung hängen eine Vielzahl von zweiten Steuerungsaufgaben von der erfolgreichen und nach dem neuen Verfahren garantierten Synchronisierung der lokalen Uhren in dem ersten und zweiten Steuerungsgerät ab. Die Ausgestaltung ermöglicht eine besonders effiziente Ausführung von zahlreichen verschiedenen Steuerungsaufgaben, da gewissermaßen eine zentrale Überwachung der Uhrensynchronisierung erfolgt. In bevorzugten Ausführungsbeispielen führt auch das erste Steuerungsgerät eine Vielzahl von ersten Steuerungsaufgaben mit voneinander verschiedenen Zykluszeiten in Abhängigkeit von der ersten lokalen Uhr aus, was die Effizienz der neuen Vorrichtung und des neuen Verfahrens nochmals erhöht.

In einer weiteren Ausgestaltung besitzen das erste und das zweite Steuerungsgerät jeweils einen fehlersicher implementierten Verarbeitungsteil mit einer Zeiterwartung für die Triggernachricht.

Eine Zeiterwartung im Sinne dieser Ausgestaltung beinhaltet, dass das entsprechende Steuerungsgerät den wiederholten Empfang der Triggernachricht innerhalb vordefinierter Zeitintervalle erwartet und ggf. bei Ausbleiben der Triggernachricht in dem nächsten Erwartungsintervall eine Fehlerreaktion einleitet, die insbesondere das Abschalten des ersten bzw. zweiten lokalen Aktors beinhalten kann. Die Ausgestaltung ermöglicht eine kostengünstige und flexible Realisierung der neuen Vorrichtung und eine entsprechend einfache Implementierung des neuen Verfahrens, da der Zeitgeber in dieser Ausgestaltung nicht-fehlersicher implementiert werden kann, ohne die Fehlersicherheit im Sinne der oben genannten Normen zu gefährden. Andererseits ist diese Ausgestaltung besonders vorteilhaft, da die Überwachung der Zeitsynchronisation minimale garantierte Abschalt- bzw. Reaktionszeiten ermöglicht, was insbesondere für die Implementierung von sicherheitsrelevanten Steuerungsaufgaben von großem Vorteil ist.

In einer weiteren Ausgestaltung verwenden die neue Vorrichtung und das entsprechende Verfahren ein drittes Steuerungsgerät, das eine dritte lokale Uhr besitzt und zyklisch dritte Steuerungsaufgaben ausführt, wobei das dritte Steuerungsgerät beim Empfang der Triggernachricht eine dritte Lokalzeit bestimmt und an das erste Steuerungsgerät versendet, und wobei das erste Steuerungsgerät eine weitere Differenz zwischen der ersten und der dritten Lokalzeit bestimmt und in Abhängigkeit von der weiteren Differenz den lokalen ersten Aktor ansteuert.

In dieser Ausgestaltung überwacht das erste Steuerungsgerät eine weitere Uhrensynchronisation anhand einer weiteren Differenz, die vorteilhaft getrennt von der (ersten) Differenz ist, die in Kooperation mit dem zweiten Steuerungsgerät ausgewertet wird. Vorteilhaft überwachen die neue Vorrichtung und das entsprechende Verfahren dieser Ausgestaltung die Uhrensynchronisation bei einer Vielzahl von Steuerungsgeräten jeweils paarweise. Allgemein ist es im Rahmen dieser Ausgestaltung von Vorteil, wenn das erste Steuerungsgerät für jede FS-Kommunikationsbeziehung zu einem weiteren Steuerungsgerät eine zugehörige Uhrensynchronisation anhand einer paarweise gebildeten Differenz überwacht. Eine FS-Kommunikation in diesem Sinne ist eine Kommunikation des ersten Steuerungsgerätes mit einem anderen Steuerungsgerät, bei der sicherheitsrelevante Informationen im Sinne der oben angegebenen Normen ausgetauscht werden. Die Ausgestaltung besitzt den Vorteil, dass die sicherheitsrelevante Abschaltung eines lokalen Aktors an dem ersten Steuerungsgerät nur dann erfolgt, wenn der entsprechende Aktor von der gegebenenfalls gescheiterten Uhrensynchronisation betroffen ist. Die Ausgestaltung erhöht damit die Verfügbarkeit von Anlagenteilen bei hoher Fehlersicherheit.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Ausführungsbeispiels der neuen Vorrichtung,
- Fig. 2: ein Flussdiagramm zur Erläuterung eines Ausführungsbeispiels des neuen Verfahrens, das in der Vorrichtung aus Fig. 1 implementiert ist, und
- Fig. 3: zwei Zeitdiagramme, die die zyklische Ausführung von Steuerungsaufgaben auf zwei Steuerungsgeräten der Vorrichtung aus Fig. 1 repräsentieren.

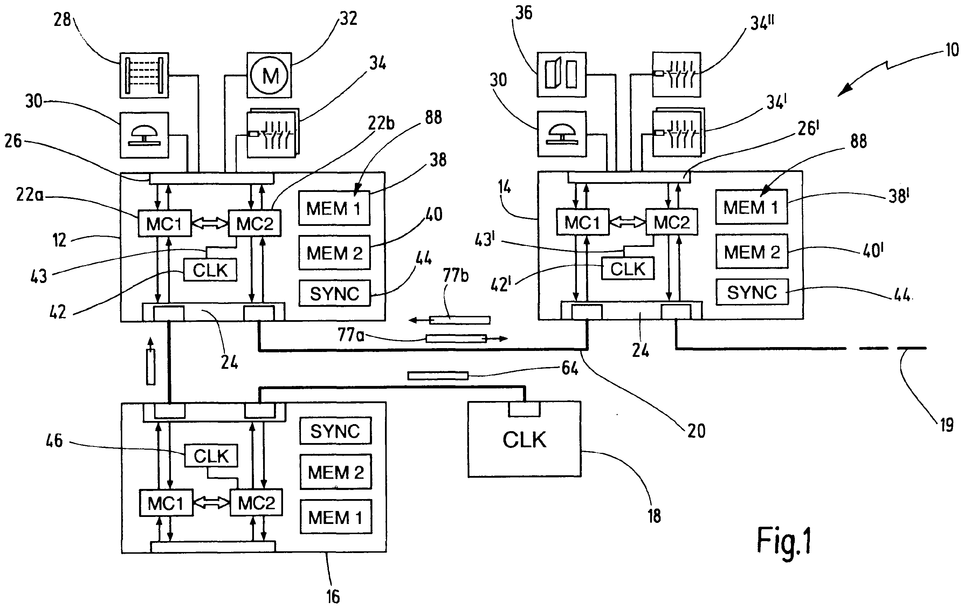

In Fig. 1 ist ein Ausführungsbeispiel der neuen Vorrichtung in seiner Gesamtheit mit der Bezugsziffer 10 bezeichnet. Die Vorrichtung 10 beinhaltet ein erstes Steuerungsgerät 12, ein zweites Steuerungsgerät 14, ein drittes Steuerungsgerät 16, einen Zeitgeber 18 und ein Kommunikationsnetzwerk 20, über das die Steuerungsgeräte und der Zeitgeber miteinander verbunden sind. In einigen bevorzugten Ausführungsbeispielen ist das Kommunikationsnetzwerk 20 ein Ethernet-Netzwerk, das zur fehlersicheren Kommunikation zwischen Steuerungsgeräten zum automatisierten Steuern einer Maschinenanlage ausgebildet ist. Beispielsweise handelt es sich um ein Kommunikationsnetzwerk, das unter der Bezeichnung SafetyNET p von der Pilz GmbH & Co.KG, Deutschland, angeboten wird. Grundsätzlich kann das Kommunikationsnetzwerk 20 auch einem anderen Kommunikationsprotokoll entsprechen, etwa Profinet/Profisafe, und/oder drahtlose Übertragungsstrecken beinhalten. In allen bevorzugten Ausführungsbeispielen kommunizieren die Steuerungsgeräte 12, 14, 16 über das Kommunikationsnetzwerk 20 zyklisch miteinander, wie dies für die Kommunikation von verteilten Steuerungsgeräten üblich und bekannt ist. Es können weitere Steuerungsgeräte an das Kommunikationsnetzwerk 20 angeschlossen sein, wie dies bei Bezugsziffer 19 symbolisch angedeutet ist.

Vorteilhaft besitzt das erste Steuerungsgerät hier einen fehlersicheren Aufbau im Sinne von SIL2 oder höher gemäß EN 61508 und/oder PL d oder höher gemäß ISO 13849-1. In den bevorzugten Ausführungsbeispielen besitzt das erste Steuerungsgerät zwei redundante Verarbeitungskanäle, die hier vereinfacht anhand eines ersten Mikrocontrollers 22a und eines zweiten Mikrocontrollers 22b dargestellt sind. Alternativ oder ergänzend können die beiden redundanten Signalverarbeitungskanäle ganz oder teilweise mit Hilfe von anderen Logikschaltkreisen realisiert sein, beispielsweise Mikroprozessoren, ASICs und/oder FPGAs. Im Folgenden wird der Einfachheit halber auf die beiden Mikrocontroller 22a, 22b Bezug genommen, ohne dass dies andere fehlersichere Realisierungen im Sinne der vorgenannten Normen ausschließen soll.

Die beiden Mikrocontroller 22a, 22b arbeiten hier vorteilhaft redundant zueinander, wobei sie Prozessdaten von angeschlossenen Sensoren und/oder anderen Steuerungsgeräten aufnehmen. Dementsprechend besitzt das erste Steuerungsgerät 12 hier eine Netzwerkschnittstelle 24, über die das Steuergerät 12 mit dem Kommunikationsnetzwerk 20 verbunden ist, und eine I/O-Schnittstelle 26, an die lokale Sensoren und/oder Aktoren angeschlossen werden können. Beispielhaft sind in Fig. 1 ein Lichtgitter 28, ein Not-Aus-Taster 30, eine elektrischer Antrieb 32 und mehrere Schütze 34 dargestellt, die über die I/O-Schnittstelle 26 an das erste Steuergerät 12 angeschlossen sind. Die symbolische Darstellung zeigt vor allem sicherheitsrelevante Sensoren, wie insbesondere den Not-Aus-Taster 30. Prinzipiell können aber auch nicht-sicherheitsrelevante Sensoren an das Steuerungsgerät 12 angeschlossen sein. Ebenso können nicht-sicherheitsrelevante Aktoren an das Steuerungsgerät 12 angeschlossen sein, was hier beispielhaft anhand des Antriebs 32 dargestellt ist. Nicht-sicherheitsrelevante Sensoren und Aktoren dienen vor allem dazu, den sogenannten Standard-Steuerungsablauf einer automatisierten Anlage zu realisieren. In den bevorzugten Ausführungsbeispielen ist die Vorrichtung 10 in der Lage, sowohl die fehlersichere FS-Steuerung als auch die Standard-Steuerung einer automatisierten Anlage auszuführen.

In einigen Ausführungsbeispielen ist das Steuerungsgerät 12 dazu ausgebildet, die Prozessdaten mit Hilfe der Mikrocontroller 22a, 22b nach einer vordefinierten Logik zu verknüpfen und in Abhängigkeit davon Steuerdaten zum Ansteuern von Aktoren erzeugen. Dementsprechend können die ersten Steuerungsaufgaben das Aufnehmen und logische Verknüpfen von Prozessdaten sowie das Erzeugen von Steuersignalen für Aktoren beinhalten. In diesen Ausführungsbeispielen besitzt das Steuerungsgerät 12 somit eine Steuerfunktion im Sinne einer SPS (Speicher Programmierbaren Steuerung). In anderen Ausführungsbeispielen kann das Steuerungsgerät 12 ein reines I/O-Gerät (Eingabe und/oder Ausgabe-Gerät) sein, dessen Hauptfunktion im Wesentlichen darin liegt, Prozessdaten von den angeschlossenen Sensoren aufzunehmen und an andere Steuerungsgeräte (zur logischen Verknüpfung dort) zu senden und/oder Steuerdaten zum Ansteuern der Aktoren entgegenzunehmen und in Abhängigkeit davon die Aktoren zu betätigen. Dementsprechend beinhalten die ersten Steuerungsaufgaben in diesen Ausführungsbeispielen in erster Linie das Aufnahmen und Versenden der Prozessdaten von angeschlossenen Sensoren und/oder das Entgegennehmen von Steuerdaten sowie das Betätigen oder Nicht-Betätigen von Aktoren. Darüber hinaus kann das Steuerungsgerät 12 in weiteren Ausführungsbeispielen eine gemischte Funktionalität haben, so dass es einerseits eine Steuerfunktion im Sinne einer SPS ausführt und andererseits als I/O-Gerät fungiert.

In einigen bevorzugten Ausführungsbeispielen ist das zweite Steuerungsgerät 14 in gleicher Weise aufgebaut wie das erste Steuerungsgerät 12, obwohl dies nicht zwingend erforderlich ist. Beispielsweise kann das zweite Steuerungsgerät 14 ein reines I/O-Gerät sein, während das erste Steuerungsgerät 12 eine Steuerfunktion im Sinne einer SPS ausführt oder rumgekehrt. Beispielhaft sind in Fig. 1 ein Not-Aus-Taster 30 und ein Schutztürschalter 36 sowie mehrere Schütze 34 an die I/O-Schnittstelle 26 des zweiten Steuergerätes 14 angeschlossen. Der Schutztürsensor 36 ist ein weiteres Beispiel für einen sicherheitsrelevanten Sensor, der typischerweise für die FS-Steuerung einer automatisierten Anlage verwendet wird.

Das erste Steuerungsgerät 12 besitzt hier einen oder mehrere Speicher zum Speichern eines Anwenderprogramms, das auf dem ersten Steuerungsgerät 12 ausgeführt wird, sowie zum Speichern von Parametern und/oder Prozessdaten. Beispielhaft sind hier ein erster Speicher 38 und ein zweiter Speicher 40 dargestellt. In einigen Ausführungsbeispielen besitzt das erste Steuerungsgerät 12 mehrere separate Speicher 38, 40, wobei jeder Mikrocontroller 22 exklusiven Zugriff auf einen der beiden Speicher 38, 40 besitzt. In anderen Ausführungsbeispielen können die Speicher 38, 40 separate Speicherbereiche innerhalb eines zusammenhängenden Speichers sein. Die Speicher 38, 40 können nichtflüchtige und/oder flüchtige Speicher sein oder beinhalten.

Bei der Bezugsziffer 42 ist eine lokale Uhr angedeutet, die eine lokale Zeitbasis bzw. einen lokalen Systemtakt in dem ersten Steuerungsgerät 12 bereitstellt und über einen Uhrsteuerkreis 43 vor- oder nachgestellt werden kann. In den bevorzugten Ausführungsbeispielen werden sämtliche Steuerungsaufgaben in dem Steuerungsgerät 12 in zyklisch wiederkehrenden Intervallen durchgeführt, welche von der lokalen Uhr 42 abhängen. In vergleichbarer Weise besitzt das zweite Steuerungsgerät 14 eine zweite lokale Uhr 42', die eine lokale Zeitbasis für die zweiten Steuerungsaufgaben bereitstellt, die mit dem zweiten Steuerungsgerät 14 ausgeführt werden. Die zweite Uhr kann mit einem zweiten Uhrsteuerkreis 43' in dem zweiten Steuerungsgerät 14 vor- oder nachgestellt werden. Beispielhaft sind die Uhrsteuerkreise 43, 43' hier durch eine Verbindung zu dem jeweils zweiten Mikrocontroller 22b angedeutet. Vorteilhaft kann der Uhrsteuerkreis somit eine Softwareapplikation beinhalten, die auf dem Mikrocontroller ausgeführt wird. Alternativ oder ergänzend könnte der Uhrsteuerkreis mit einem anderen Logikschaltkreis realisiert sein, etwa mit dem ersten Mikrocontroller oder einem weiteren, hier nicht dargestellten Schaltkreis.

In den bevorzugten Ausführungsbeispielen führen das erste Steuerungsgerät 12 und das zweite Steuerungsgerät 14 ihre jeweiligen Steuerungsaufgaben weitgehend synchron aus. Daher ist es wünschenswert, dass die lokalen Uhren 42, 42'synchron zueinander laufen. Um dies zu erreichen, besitzen das erste und zweite Steuerungsgerät 12, 14 jeweils einen Synchronisationsdienst 44. In den bevorzugten Ausführungsbeispielen ist der Synchronisationsdienst 44 eine zyklisch wiederholte Aufgabe, die von zumindest einem der Mikrocontroller 22a, 22b ausgeführt wird und dafür sorgt, dass die jeweilige lokale Uhr 42, 42' mit einer externen Referenzuhr synchronisiert wird. Beispielsweise könnte der Synchronisationsdienst 44 eine Uhrensynchronisation nach dem Protokoll IEEE 1588 ausführen. Die Referenzuhr ist in diesem Ausführungsbeispiel in dem dritten Steuerungsgerät 16 angeordnet, das beispielsweise eine Master-Steuereinheit in der Vorrichtung 10 sein kann. In einigen Ausführungsbeispielen sind das erste Steuerungsgerät 12 und zweite Steuerungsgerät 14 untergeordnete Steuerungseinheiten und/oder dezentrale I/O-Einheiten, die einerseits in der Lage sind, lokale Steuerungsaufgaben auszuführen und andererseits Prozessdaten an die Master-Steuereinheit 16 liefern. In anderen Ausführungsbeispielen sind die Steuerungsgeräte 12, 14, 16 jeweils autark arbeitende Steuerungen, die beispielsweise verschiedene Maschinenmodule einer komplexen Anlage steuern und miteinander Informationen austauschen, damit die verschiedenen Anlagenteile reibungslos zusammenarbeiten. Dementsprechend kann das dritte Steuerungsgerät 16 in gleicher Weise aufgebaut sein wie das erste Steuerungsgerät und/oder zweite Steuerungsgerät, wie dies in Fig. 1 vereinfacht dargestellt ist. Es versteht sich, dass geeignete Sensoren und/oder Aktoren auch an das dritte Steuerungsgerät 16 angeschlossen sein können.

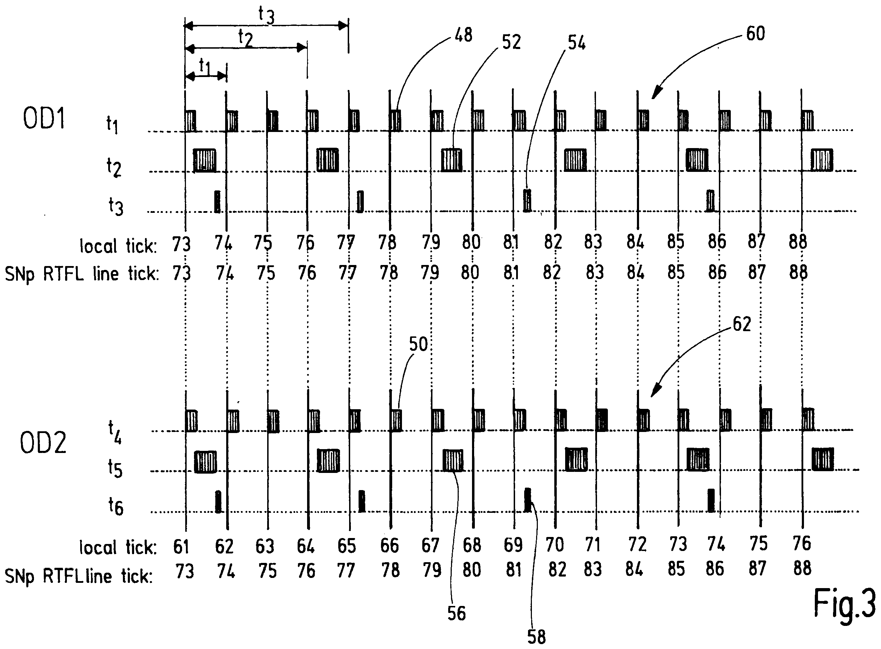

In Fig. 3 ist die zyklische Ausführung von ersten und zweiten Steuerungsaufgaben auf dem ersten Steuerungsgerät 12 (hier als OD1 bezeichnet) und dem zweiten Steuerungsgerät 14 (hier als OD2 bezeichnet) dargestellt. Fig. 3 zeigt von links nach rechts eine Zeitachse, die in mehrere Zeitintervalle t₁, t₂, t₃ unterteilt ist. In jedem Zeitintervall werden eine oder mehrere Steuerungsaufgaben 48, 50, 52, 54, 56, 58 ausgeführt. Beispielhaft führt das erste Steuerungsgerät 12 (OD1) zyklisch wiederkehrend die Steuerungsaufgaben 48, 52, 54 aus. Dabei wird die Steuerungsaufgabe 48 in kürzeren Zeitintervallen wiederholt als die Steuerungsaufgabe 52 und diese wird wiederum in kürzeren Zeitintervallen wiederholt als die Steuerungsaufgabe 54. Die erste Steuerungsaufgabe 48 soll möglichst synchron zu der zweiten Steuerungsaufgabe 50 auf dem zweiten Steuerungsgerät 14 (OD2) ausgeführt werden.

In den bevorzugten Ausführungsbeispielen erfolgt die Ausführung der ersten Steuerungsaufgaben 48, 52, 54 auf dem ersten Steuerungsgerät 12 (OD1) in lokalen Zeitintervallen 60, die von der lokalen Uhr 42 abhängen. Die zweiten Steuerungsaufgaben 50, 56, 58 werden auf dem zweiten Steuerungsgerät 14 (OD2) in Zeitintervallen 62 ausgeführt, die von der lokalen Uhr 42' abhängen. In Fig. 3 ist die Abhängigkeit von der jeweiligen lokalen Uhr anhand eines sogenannten "local tick" dargestellt, d.h. anhand eines lokalen Taktschlages, den die jeweilige lokale Uhr erzeugt. Wie in Fig. 3 dargestellt ist, müssen die lokalen Taktschläge nicht unbedingt eine gleiche Absolutzeit angeben. Es genügt in den bevorzugten Ausführungsbeispielen, wenn die jeweiligen lokalen Taktschläge relativ zueinander synchron sind.

In Fig. 3 ist ferner ein sogenannter "line tick" angegeben. Hierbei handelt es sich um eine Zeitbasis, die in den bevorzugten Ausführungsbeispielen über das Kommunikationsnetzwerk 20 bereitgestellt wird, insbesondere mit Hilfe von zyklisch versendeten Nachrichten der Master-Steuereinheit. In einigen Ausführungsbeispielen repräsentiert die Zeitbasis des Kommunikationsnetzwerks 20 daher eine gemeinsame Systemzeit, von der die wechselseitige Kommunikation der Steuerungsgeräte 12, 14, 16 untereinander abhängt. In einigen Ausführungsbeispielen sorgt der jeweilige Synchronisationsdienst 44 in den Steuerungsgeräten 12, 14 dafür, dass die jeweilige lokale Uhr 42, 42' und der "line tick" synchron zueinander sind.

In den bevorzugten Ausführungsbeispielen wird die zeitsynchrone Ausführung der ersten Steuerungsaufgaben 48, 52, 54 und der zweiten Steuerungsaufgaben 50, 56, 58 nicht nur mit Hilfe des Synchronisierungsdienstes 44 auf den jeweiligen Steuerungsgeräten 12, 14 gewährleistet, sondern zusätzlich noch fehlersicher überwacht, indem das erste Steuerungsgerät 12 und das zweite Steuerungsgerät 14 synchron zueinander jeweils eine Lokalzeit bestimmen, die den jeweiligen lokalen Empfang einer externen gemeinsamen Triggernachricht repräsentiert. Diese Triggernachricht wird in den bevorzugten Ausführungsbeispielen von dem Zeitgeber 18 initiiert und ist in Fig. 1 bei der Bezugsziffer 64 dargestellt. Die Triggernachricht ist in einigen bevorzugten Ausführungsbeispielen ein Datentelegramm, das über das Kommunikationsnetzwerk 20 an das erste, zweite und dritte Steuerungsgerät 12, 14, 16 übertragen wird. In einigen Ausführungsbeispielen ist der Zeitgeber 18 ein nicht-fehlersicher aufgebauter Zeitgeberbaustein, der in einem der an das Kommunikationsnetzwerk 20 angeschlossenen Steuerungsgeräte enthalten ist. In anderen Ausführungsbeispielen kann der Zeitgeberbaustein 18 getrennt von allen Steuerungsgeräten, die Sensoren einlesen und/oder Aktoren ansteuern, an das Kommunikationsnetzwerk 20 angeschlossen sein. In einigen Ausführungsbeispielen kann der Zeitgeber 18 zusammen mit der Referenzuhr 46 in einem Steuerungsgerät implementiert sein. In anderen Ausführungsbeispielen kann der Zeitgeber 18 die Triggernachricht 64 drahtlos und getrennt von den übrigen Nachrichten in dem Kommunikationsnetzwerk 20 an die Steuerungsgeräte 12, 14, 16 übertragen. Vorteilhaft erzeugt der Zeitgeber 18 die Triggernachricht 64 in zyklisch wiederkehrenden Intervallen, die mehr als ein Zehnfaches größer sind als die Zeitintervalle 60, 62, mit denen die lokalen Uhren die zyklische Ausführung der Steuerungsaufgaben auf den Steuerungsgeräten initiieren.

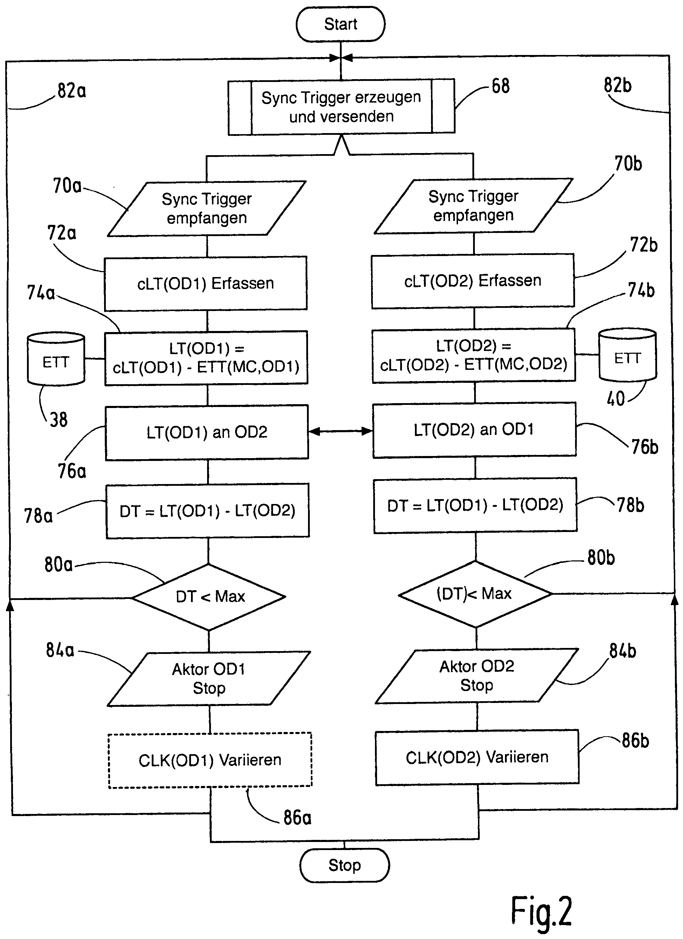

Ein bevorzugtes Ausführungsbeispiel des neuen Verfahrens wird nachfolgend anhand Fig. 2 erläutert. Gemäß Schritt 68 erzeugt der Zeitgeber 18 die Triggernachricht 64 und versendet diese an alle Steuerungsgeräte, in denen das neue Verfahren implementiert ist. Der Einfachheit halber ist dieses Verfahren nachfolgend nur anhand von zwei Steuerungsgeräten dargestellt, die als OD1 und OD2 bezeichnet sind und beispielsweise das erste Steuerungsgerät 12 und das zweite Steuerungsgerät 14 sein können. In den bevorzugten Ausführungsbeispielen ist das beschriebene Verfahren jedoch auch zwischen weiteren Steuerungsgeräten implementiert, beispielsweise zwischen dem ersten Steuerungsgerät 12 und dem dritten Steuerungsgerät 16.

Die Steuerungsgeräte 12, 14 empfangen jeweils die Triggernachricht von dem Zeitgeber 18, was in den Schritten 70a, 70b dargestellt ist. Die Steuerungsgeräte empfangen die Triggernachricht 64 von dem Zeitgeber 18 annähernd zeitgleich, aber nicht unbedingt exakt zeitgleich, weil die Laufzeit der Triggernachricht 64 von dem Zeitgeber 18 zu dem jeweiligen Steuerungsgerät 12, 14 unterschiedlich sei kann.

Gemäß Schritt 72a, 72b erfasst jedes Steuerungsgerät mit Hilfe seiner lokalen Uhr den Zeitpunkt, zu dem es die Triggernachricht 64 empfängt. Der entsprechende Zeitpunkt ist in Fig. 2 als cLT (ODx) bezeichnet, wobei "x" das jeweilige Gerät bezeichnet.

In den bevorzugten Ausführungsbeispielen berechnet jedes Steuerungsgerät eine korrigierte lokale Empfangszeit, indem die im Schritt 72a, 72b erfasste Empfangszeit um einen Parameter ETT (MC, ODx) reduziert wird, der in dem entsprechenden Speicher 38, 38' des jeweiligen Steuerungsgerätes gespeichert ist. Der Parameter ETT (MC, ODx) repräsentiert eine erwartete oder übliche Laufzeit der Triggernachricht von dem Zeitgeber 18 zu dem jeweiligen Steuerungsgerät. Auf diese Weise wird in einigen bevorzugten Ausführungsbeispielen die unterschiedliche Laufzeit der Triggernachricht zu dem jeweiligen Steuerungsgerät berücksichtigt.

Gemäß Schritt 76a, 76b sendet jedes der beiden Steuerungsgeräte anschließend die korrigierte lokale Empfangszeit (Lokalzeit LT (ODx)) an das jeweils andere Steuerungsgerät. In Fig. 1 sind dementsprechend zwei Nachrichten 77a, 77b angedeutet. Gemäß Schritt 78a, 78b berechnet dann jedes der beiden beteiligten Steuerungsgeräte eine Differenz DT zwischen der korrigierten lokalen Empfangszeit des ersten Steuerungsgerätes und der korrigierten lokalen Empfangszeit des zweiten Steuerungsgerätes. Anschließend vergleicht jedes der beiden Steuerungsgeräte die berechnete Differenz mit einem definierten Schwellenwert gemäß Schritt 80. Liegt die berechnete Differenz betragsmäßig unterhalb des definierten Schwellenwertes, kehrt das Verfahren zu Schritt 68 zurück. Die lokalen Uhren 42, 43 in den beiden betroffenen Steuerungsgeräten arbeiten dann hinreichend synchron zueinander, da die jeweils berechnete Differenz zwischen den lokalen Empfangszeiten der Triggernachricht 64 kleiner ist als eine definierte Toleranz, die durch den gewählten Schwellenwert im Schritt 80a, 80b repräsentiert ist. Übersteigt die berechnete Differenz DT hingegen betragsmäßig den definierten Schwellenwert, stoppt das jeweilige Steuerungsgerät zumindest einen lokalen Aktor gemäß Schritt 84. In den bevorzugten Ausführungsbeispielen stoppt das jeweilige Steuerungsgerät einen lokalen Aktor, für dessen Ansteuerung Sensordaten verarbeitet werden, die von einem Sensor an dem jeweils anderen Steuerungsgerät stammen. "Stoppen" des Aktors bedeutet hier, dass der entsprechende Aktor in einen Zustand gebracht wird, der einen fehlersicheren Betrieb der automatisierten Anlage garantiert. Beispielsweise könnte also der Antrieb 32 am ersten Steuerungsgerät 12 angehalten werden und/oder die Steuerungsgeräte 12, 14 schalten jeweils einen lokalen Schütz 34 ab.

Gemäß Schritt 86 variiert das zweite Steuerungsgerät 14 ferner die lokale Uhr 42' in Abhängigkeit davon, ob die lokale Uhr 42' schneller oder langsamer als die lokale Uhr 42 in dem ersten Steuerungsgerät läuft, um auf diese Weise wieder einen synchronen Gleichlauf der lokalen Uhren innerhalb der definierten Toleranzgrenzen zu erreichen. In einigen bevorzugten Ausführungsbeispielen variiert auch das erste Steuerungsgerät die lokale Uhr in entgegengesetzter Richtung, d.h. die lokale Uhr im ersten Steuerungsgerät wird beschleunigt, wenn die lokale Uhr im zweiten Steuerungsgerät verlangsamt wird und umgekehrt, um auf diese Weise eine schnelle Wieder-Synchronisation der beiden lokalen Uhren innerhalb der gesetzten Toleranzgrenzen zu erreichen.

In bevorzugten Ausführungsbeispielen variiert der Uhrsteuerkreis die jeweilige lokale Uhr innerhalb einer zugesicherten Zeittoleranz, die als Parameter in dem Speicher 38, 40 des jeweiligen Steuerungsgerätes hinterlegt ist. Die zugesicherte Zeittoleranz definiert eine Variationsbreite, innerhalb der die jeweilige lokale Uhr des Steuerungsgerätes maximal schwanken darf.

In bevorzugten Ausführungsbeispielen besitzt jedes der Steuerungsgeräte 12, 14 eine Zeiterwartung 88, die als Parameter in einem der Speicher 38, 40 gespeichert ist und die ein Zeitintervall definiert, das mit dem Empfang einer ersten Triggernachricht 64 beginnt und innerhalb dessen eine weitere Triggernachricht 64 empfangen werden muss. Auf diese Weise überwacht jedes der Steuerungsgeräte 12, 14 den zyklischen Empfang der Triggernachrichten 64. Bleibt eine Triggernachricht 64 innerhalb der Zeiterwartung 88 aus, schaltet das entsprechende Steuerungsgerät 12, 14 zumindest einen lokalen Aktor in einen fehlersicheren Zustand (Ruhezustand).

## Patentansprüche

1. Vorrichtung zum Steuern einer automatisierten Anlage, mit einer Vielzahl von räumlich verteilten Steuerungsgeräten (12, 14, 16), die über ein Kommunikationsnetzwerk (20) miteinander verbunden sind und zumindest ein erstes Steuerungsgerät (12) und ein zweites Steuerungsgerät (14) beinhalten, und mit einem Zeitgeber (18), wobei das erste Steuerungsgerät (12) eine erste lokale Uhr (42) besitzt und zyklisch eine Anzahl von ersten Steuerungsaufgaben (48, 52, 54) ausführt, mit denen zumindest ein erster lokaler Aktor (32, 34) angesteuert wird, wobei das zweite Steuerungsgerät (14) eine zweite lokale Uhr (42') besitzt und zyklisch eine Anzahl von zweiten Steuerungsaufgaben (50, 56, 58) ausführt, mit denen zumindest ein zweiter lokaler Aktor (34') angesteuert wird, wobei das erste und das zweite Steuerungsgerät (12, 14) jeweils einen Synchronisationsdienst (44) besitzen, mit dem die jeweilige lokale Uhr (42, 42') auf eine gemeinsame Referenzuhr (46) synchronisiert wird, wobei der Zeitgeber (18) wiederholt eine Triggernachricht (64) an das erste und das zweite Steuerungsgerät (12, 14) versendet, wobei das erste Steuerungsgerät (12) beim Empfang der Triggernachricht (64) eine erste Lokalzeit bestimmt und an das zweite Steuerungsgerät (14) versendet, wobei das zweite Steuerungsgerät (14) beim Empfang der Triggernachricht (64) eine zweite Lokalzeit bestimmt und an das erste Steuerungsgerät (12) versendet, **dadurch gekennzeichnet, dass** das erste und das zweite Steuerungsgerät (12, 14) jeweils eine Differenz zwischen der ersten und der zweiten Lokalzeit bestimmen (78), und wobei das erste Steuerungsgerät (12) den ersten lokalen Aktor (32, 34) in Abhängigkeit von der Differenz ansteuert und das zweite Steuerungsgerät (14) den zweiten lokalen Aktor (32') in Abhängigkeit von der Differenz ansteuert.

2. Vorrichtung nach Anspruch 1, wobei der Zeitgeber (18) räumlich getrennt von dem ersten und dem zweiten Steuerungsgerät (12, 14) an das Kommunikationsnetzwerk (20) angeschlossen ist.

3. Vorrichtung nach Anspruch 1 oder 2, wobei das erste Steuerungsgerät (12) einen ersten Parameterspeicher (38') aufweist, in dem ein erster Laufzeitparameter (ETT) gespeichert ist, der eine erwartete Laufzeit der Triggernachricht (64) von dem Zeitgeber (18) zu dem ersten Steuerungsgerät (12) repräsentiert, und wobei das erste Steuerungsgerät (12) die erste Lokalzeit als Differenz zwischen einer lokalen Triggernachrichtenempfangszeit (cLT(OD1)) und dem ersten Laufzeitparameter (ETT) bestimmt (74a).

4. Vorrichtung nach einem der Ansprüche 1 bis 3, wobei das erste Steuerungsgerät (12) den ersten Aktor (32, 34) in einen fehlersicheren Zustand versetzt, wenn die Differenz einen vordefinierten Schwellenwert übersteigt (84a).

5. Vorrichtung nach einem der Ansprüche 1 bis 4, wobei das erste Steuerungsgerät (12) an zumindest einem lokalen Sensoreingang (26) einen ersten Sensorzustand einliest und eine Prozessnachricht mit dem ersten Sensorzustand an das zweite Steuerungsgerät (14) versendet.

6. Vorrichtung nach einem der Ansprüche 1 bis 5, wobei das erste Steuerungsgerät (12) einen weiteren Aktor (32), der lokal an das erste Steuerungsgerät (12) angeschlossen ist, unabhängig von der Differenz ansteuert.

7. Vorrichtung nach einem der Ansprüche 1 bis 6, wobei das zweite Steuerungsgerät (14) einen Uhrsteuerkreis (43') besitzt, der die zweite Uhr (42') in Abhängigkeit von der Differenz verlangsamt oder beschleunigt, wenn die Differenz einen vordefinierten Schwellenwert übersteigt (86b).

8. Vorrichtung nach Anspruch 7, wobei das zweite Steuerungsgerät (14) eine zugesicherte Zeittoleranz besitzt, und wobei der Uhrsteuerkreis (43') die zweite lokale Uhr (42') innerhalb der zugesicherten Zeittoleranz verlangsamt oder beschleunigt, bis die Differenz unter den vordefinierten Schwellenwert sinkt.

9. Vorrichtung nach einem der Ansprüche 7 oder 8, wobei der Uhrsteuerkreis (43') die zweite lokale Uhr (42') auf einen definierten Offset zu der Referenzuhr synchronisiert.

10. Vorrichtung nach einem der Ansprüche 1 bis 9, wobei das zweite Steuerungsgerät (14) eine Vielzahl von zweiten Steuerungsaufgaben (50, 56, 58) mit voneinander verschiedenen Zykluszeiten in Abhängigkeit von der zweiten lokalen Uhr (42') zyklisch ausführt.

11. Vorrichtung nach einem der Ansprüche 1 bis 10, wobei das erste und das zweite Steuerungsgerät (12, 14) jeweils einen fehlersicher implementierten Verarbeitungsteil (22a, 22b) mit einer Zeiterwartung (88) für die Triggernachricht (64) besitzen.

12. Vorrichtung nach einem der Ansprüche 1 bis 11, ferner mit einem dritten Steuerungsgerät (16), das eine dritte lokale Uhr besitzt und zyklisch dritte Steuerungsaufgaben ausführt, wobei das dritte Steuerungsgerät beim Empfang der Triggernachricht (64) eine dritte Lokalzeit bestimmt und an das erste Steuerungsgerät (12) versendet, und wobei das erste Steuerungsgerät (12) eine weitere Differenz zwischen der ersten und der dritten Lokalzeit bestimmt und in Abhängigkeit von der weiteren Differenz den lokalen ersten Aktor ansteuert.

13. Verfahren zum Steuern einer automatisierten Anlage mit einem Zeitgeber (18) und einer Vielzahl von räumlich verteilten Steuerungsgeräten (12, 14, 16, 18), die über ein Kommunikationsnetzwerk (20) miteinander verbunden sind und zumindest ein erstes Steuerungsgerät (12) und ein zweites Steuerungsgerät (14) beinhalten, wobei das erste Steuerungsgerät (12) eine erste lokale Uhr (42) besitzt und zyklisch eine Anzahl von ersten Steuerungsaufgaben (48, 52, 54) ausführt, mit denen zumindest ein erster lokaler Aktor (32, 34) angesteuert wird, wobei das zweite Steuerungsgerät (14) eine zweite lokale Uhr (42') besitzt und zyklisch eine Anzahl von zweiten Steuerungsaufgaben (50, 56, 58) ausführt, mit denen zumindest ein zweiter lokaler Aktor (34') angesteuert wird, wobei das erste und das zweite Steuerungsgerät (12, 14) jeweils einen Synchronisationsdienst (44) besitzen, mit dem die jeweilige lokale Uhr (42, 42') auf eine gemeinsame Referenzuhr (46) synchronisiert wird, und wobei der Zeitgeber (18) wiederholt eine Triggernachricht (64) an das erste und das zweite Steuerungsgerät (12, 14) versendet, mit den Schritten:
- das erste Steuerungsgerät (12) bestimmt beim Empfang der Triggernachricht (64) eine erste Lokalzeit und versendet diese an das zweite Steuerungsgerät (14),
- das zweite Steuerungsgerät (14) bestimmt beim Empfang der Triggernachricht (64) eine zweite Lokalzeit und versendet diese an das erste Steuerungsgerät (12) **dadurch gekennzeichnet, dass**
- das erste und das zweite Steuerungsgerät (12, 14) bestimmen jeweils eine Differenz zwischen der ersten und der zweiten Lokalzeit (78), und
- das erste Steuerungsgerät (12) steuert den ersten lokalen Aktor (32, 34) in Abhängigkeit von der Differenz an und das zweite Steuerungsgerät steuert den zweiten lokalen Aktor (34') in Abhängigkeit von der Differenz an.

14. Computerprogramm mit Programmcode, der auf einem Datenträger gespeichert ist und dazu ausgebildet ist, ein Verfahren zum Steuern einer automatisierten Anlage nach Anspruch 13 auszuführen, wobei die automatisierte Anlage einen Zeitgeber (18) und eine Vielzahl von räumlich verteilten Steuerungsgeräten (12, 14, 16, 18) besitzt, die über ein Kommunikationsnetzwerk (20) miteinander verbunden sind und zumindest ein erstes Steuerungsgerät (12) und ein zweites Steuerungsgerät (14) beinhalten, wobei das erste Steuerungsgerät (12) eine erste lokale Uhr (42) besitzt und zyklisch eine Anzahl von ersten Steuerungsaufgaben (48, 52, 54) ausführt, mit denen zumindest ein erster lokaler Aktor (32, 34) angesteuert wird, wobei das zweite Steuerungsgerät (14) eine zweite lokale Uhr (42') besitzt und zyklisch eine Anzahl von zweiten Steuerungsaufgaben (50, 56, 58) ausführt, mit denen zumindest ein zweiter lokaler Aktor (34') angesteuert wird, wobei das erste und das zweite Steuerungsgerät (12, 14) jeweils einen Synchronisationsdienst (44) besitzen, mit dem die jeweilige lokale Uhr (42, 42') auf eine gemeinsame Referenzuhr (46) synchronisiert wird, wobei der Zeitgeber (18) wiederholt eine Triggernachricht (64) an das erste und das zweite Steuerungsgerät (12, 14) versendet, und wobei das Verfahren mit den Schritten nach Anspruch 13 ausgeführt wird, wenn der Programmcode auf dem ersten und auf dem zweiten Steuerungsgerät ausgeführt wird.

## Claims

1. An apparatus for controlling an automated installation, comprising a plurality of physically distributed controllers (12, 14, 16) that are connected to one another via a communication network (20) and include at least a first controller (12) and a second controller (14), and comprising a timer (18), wherein the first controller (12) has a first local clock (42) and cyclically executes a number of first control tasks (48, 52, 54) that are used to control at least one first local actuator (32, 34), wherein the second controller (14) has a second local clock (42') and cyclically executes a number of second control tasks (50, 56, 58) that are used to control at least one second local actuator (34'), wherein the first and second controllers (12, 14) each have a synchronization service (44) that is used to synchronize the respective local clocks (42, 42') to a common reference clock (46), wherein the timer (18) repeatedly sends a trigger message (64) to the first and second controllers (12, 14), wherein the first controller (12), on receiving the trigger message (64), determines a first local time and sends it to the second controller (14), wherein the second controller (14), on receiving the trigger message (64), determines a second local time and sends it to the first controller (12), **characterized in that** the first and second controllers (12, 14) each determine a difference between the first and second local times (78), and wherein the first controller (12) controls the first local actuator (32, 34) on the basis of the difference and the second controller (14) controls the second local actuator (32') on the basis of the difference.

2. The apparatus of Claim 1, wherein the timer (18) is connected to the communication network (20) in a manner physically separate from the first and second controllers (12, 14).

3. The apparatus of Claim 1 or 2, wherein the first controller (12) has a first parameter memory (38') storing a first transfer time parameter (ETT) that represents an expected transfer time for the trigger message (64) from the timer (18) to the first controller (12), and wherein the first controller (12) determines (74a) the first local time as a difference between a local trigger message reception time (cLT(OD1)) and the first transfer time parameter (ETT).

4. The apparatus of anyone of Claims 1 to 3, wherein the first controller (12) puts the first actuator (32, 34) into a failsafe state when the difference exceeds a predefined threshold value (84a).

5. The apparatus of anyone of Claims 1 to 4, wherein the first controller (12) reads in a first sensor state at at least one local sensor input (26) and sends a process message including the first sensor state to the second controller (14).

6. The apparatus of anyone of Claims 1 to 5, wherein the first controller (12) controls a further actuator (32), which is locally connected to the first controller (12), independently of the difference.

7. The apparatus of anyone of Claims 1 to 6, wherein the second controller (14) has a clock control loop (43') that slows down or speeds up the second clock (42') on the basis of the difference when the difference exceeds a predefined threshold value (86b).

8. The apparatus of Claim 7, wherein the second controller (14) has a guaranteed time tolerance, and wherein the clock control loop (43') slows down or speeds up the second local clock (42') within the guaranteed time tolerance until the difference falls below the predefined threshold value.

9. The apparatus of anyone of Claims 7 or 8, wherein the clock control loop (43') synchronizes the second local clock (42') to a defined offset with respect to the reference clock.

10. The apparatus of anyone of Claims 1 to 9, wherein the second controller (14) cyclically executes a plurality of second control tasks (50, 56, 58) having mutually different cycle times on the basis of the second local clock (42').

11. The apparatus of anyone of Claims 1 to 10, wherein the first and second controllers (12, 14) each have a processing part (22a, 22b) implemented in a failsafe manner and having a time expectation (88) for the trigger message (64).

12. The apparatus of anyone of Claims 1 to 11, further comprising a third controller (16) that has a third local clock and cyclically executes third control tasks, wherein the third controller, on receiving the trigger message (64), determines a third local time and sends it to the first controller (12), and wherein the first controller (12) determines a further difference between the first and third local times and controls the local first actuator on the basis of the further difference.

13. A method for controlling an automated installation having a timer (18) and having a plurality of physically distributed controllers (12, 14, 16, 18) that are connected to one another via a communication network (20) and include at least a first controller (12) and a second controller (14), wherein the first controller (12) has a first local clock (42) and cyclically executes a number of first control tasks (48, 52, 54) that are used to control at least one first local actuator (32, 34), wherein the second controller (14) has a second local clock (42') and cyclically executes a number of second control tasks (50, 56, 58) that are used to control at least one second local actuator (34'), wherein the first and second controllers (12, 14) each have a synchronization service (44) that is used to synchronize the respective local clocks (42, 42') to a common reference clock (46), and wherein the timer (18) repeatedly sends a trigger message (64) to the first and second controllers (12, 14), the method comprising the following steps:
- the first controller (12), on receiving the trigger message (64), determines a first local time and sends it to the second controller (14),
- the second controller (14), on receiving the trigger message (64), determines a second local time and sends it to the first controller (12),
**characterized in that**
- the first and second controllers (12, 14) each determine a difference between the first and second local times (78), and
- the first controller (12) controls the first local actuator (32, 34) on the basis of the difference and the second controller controls the second local actuator (34') on the basis of the difference.

14. A computer program comprising program code stored on a data storage medium and configured to carry out a method for controlling an automated installation according to Claim 13, wherein the automated installation comprises a timer (18) and a plurality of physically distributed controllers (12, 14, 16, 18) that are connected to one another via a communication network (20) and include at least a first controller (12) and a second controller (14), wherein the first controller (12) has a first local clock (42) and cyclically executes a number of first control tasks (48, 52, 54) that are used to control at least one first local actuator (32, 34), wherein the second controller (14) has a second local clock (42') and cyclically executes a number of second control tasks (50, 56, 58) that are used to control at least one second local actuator (34'), wherein the first and second controllers (12, 14) each have a synchronization service (44) that is used to synchronize the respective local clocks (42, 42') to a common reference clock (46), and wherein the timer (18) repeatedly sends a trigger message (64) to the first and second controllers (12, 14), and wherein the method is carried out with the steps of claim 13 when the program code is executed on the first and on the second controller.

## Revendications

1. Dispositif de commande d'une installation automatisée, comprenant une pluralité d'appareils de commande (12, 14, 16) répartis dans l'espace qui sont reliés les uns aux autres par un réseau de communication (20) et comportent au moins un premier appareil de commande (12) et un deuxième appareil de commande (14), et comprenant un temporisateur (18), le premier appareil de commande (12) possédant une première horloge locale (42) et exécutant de manière cyclique un nombre de premières tâches de commande (48, 52, 54) qui pilotent au moins un premier actionneur local (32, 34), le deuxième appareil de commande (14) possédant une deuxième horloge locale (42') et exécutant de manière cyclique un nombre de deuxièmes tâches de commande (50, 56, 58) qui pilotent au moins un deuxième actionneur local (34'), le premier et le deuxième appareil de commande (12, 14) possédant respectivement un service de synchronisation (44) qui synchronise l'horloge locale (42, 42') respective sur une horloge de référence (46) commune, dans lequel le temporisateur (18) envoie à plusieurs reprises un message de déclenchement (64) au premier et au deuxième appareil de commande (12, 14), le premier appareil de commande (12) déterminant une première heure locale à la réception du message de déclenchement (64) et l'envoyant au deuxième appareil de commande (14), le deuxième appareil de commande (14) déterminant une deuxième heure locale à la réception du message de déclenchement (64) et l'envoyant au premier appareil de commande (12), **caractérisé en ce que** le premier et le deuxième appareil de commande (12, 14) déterminent respectivement une différence entre la première et la deuxième heure locale (78), et dans lequel le premier appareil de commande (12) pilote le premier actionneur local (32, 34) en fonction de la différence, et le deuxième appareil de commande (14) pilote le deuxième actionneur local (32') en fonction de la différence.

2. Dispositif selon la revendication 1, dans lequel le temporisateur (18) est connecté au réseau de communication (20) en étant physiquement séparé du premier et du deuxième appareil de commande (12, 14).

3. Dispositif selon la revendication 1 ou 2, dans lequel le premier appareil de commande (12) présente une première mémoire de paramètres (38') dans laquelle est stocké un premier paramètre de temps de propagation (ETT) qui représente un temps de propagation attendu du message de déclenchement (64) du temporisateur (18) au premier appareil de commande (12), et dans lequel le premier appareil de commande (12) détermine la première heure locale comme une différence entre une heure de réception de message de déclenchement (cLT(OD1)) et le premier paramètre de temps de propagation (ETT) (74a).

4. Dispositif selon l'une quelconque des revendications 1 à 3, dans lequel le premier appareil de commande (12) met le premier actionneur (32, 34) dans un état à sécurité intégrée si la différence dépasse (84a) une valeur seuil prédéfinie.

5. Dispositif selon l'une quelconque des revendications 1 à 4, dans lequel le premier appareil de commande (12) lit un premier état de capteur à au moins une entrée de capteur locale (26) et envoie au deuxième appareil de commande (14) un message de processus avec le premier état de capteur.

6. Dispositif selon l'une quelconque des revendications 1 à 5, dans lequel le premier appareil de commande (12) pilote, indépendamment de la différence, un autre actionneur (32) qui est connecté localement au premier appareil de commande (12).

7. Dispositif selon l'une quelconque des revendications 1 à 6, dans lequel le deuxième appareil de commande (14) possède un circuit de commande d'horloge (43') qui retarde ou avance la deuxième horloge (42') en fonction de la différence si la différence dépasse (86b) une valeur seuil prédéfinie.

8. Dispositif selon la revendication 7, dans lequel le deuxième appareil de commande (14) possède une tolérance de temps accordée, et dans lequel le circuit de commande d'horloge (43') retarde ou avance la deuxième horloge locale (42') à l'intérieur de la tolérance de temps accordée jusqu'à ce que la différence tombe sous la valeur seuil prédéfinie.

9. Dispositif selon l'une quelconque des revendications 7 ou 8, dans lequel le circuit de commande d'horloge (43') synchronise la deuxième horloge locale (42') sur un décalage défini par rapport à l'horloge de référence.

10. Dispositif selon l'une quelconque des revendications 1 à 9, dans lequel le deuxième appareil de commande (14) exécute de manière cyclique une pluralité de deuxièmes tâches de commande (50, 56, 58) ayant des temps de cycle différents les uns des autres, en fonction de la deuxième heure locale (42').

11. Dispositif selon l'une quelconque des revendications 1 à 10, dans lequel le premier et le deuxième appareil de commande (12, 14) possèdent respectivement une partie de traitement (22a, 22b) mise en œuvre de manière protégée contre les erreurs avec un temps attendu (88) pour le message de déclenchement (64).

12. Dispositif selon l'une quelconque des revendications 1 à 11, comprenant en outre un troisième appareil de commande (16) qui possède une troisième horloge locale et exécute de manière cyclique des troisièmes tâches de commande, le troisième appareil de commande déterminant une troisième heure locale à la réception du message de déclenchement (64) et l'envoyant au premier appareil de commande (12), et le premier appareil de commande (12) déterminant une autre différence entre la première et la troisième heure locale et pilotant le premier actionneur local en fonction de l'autre différence.

13. Procédé de commande d'une installation automatisée, comprenant un temporisateur (18) et une pluralité d'appareils de commande (12, 14, 16, 18) répartis dans l'espace, qui sont reliés les uns aux autres par un réseau de communication (20) et comportent au moins un premier appareil de commande (12) et un deuxième appareil de commande (14), le premier appareil de commande (12) possédant une première horloge locale (42) et exécutant de manière cyclique un nombre de premières tâches de commande (48, 52, 54) qui pilotent au moins un premier actionneur local (32, 34), le deuxième appareil de commande (14) possédant une deuxième horloge locale (42') et exécutant de manière cyclique un nombre de deuxièmes tâches de commande (50, 56, 58) qui pilotent au moins un deuxième actionneur local (34'), le premier et le deuxième appareil de commande (12, 14) possédant respectivement un service de synchronisation (44) qui synchronise l'horloge locale (42, 42') respective sur une horloge de référence (46) commune, dans lequel le temporisateur (18) envoie à plusieurs reprises un message de déclenchement (64) au premier et au deuxième appareil de commande (12, 14), comprenant les étapes suivantes :
- le premier appareil de commande (12) détermine une première heure locale à la réception du message de déclenchement (64) et l'envoie au deuxième appareil de commande (14),
- le deuxième appareil de commande (14) détermine une deuxième heure locale à la réception du message de déclenchement (64) et l'envoie au premier appareil de commande (12),
**caractérisé en ce que**
- le premier et le deuxième appareil de commande (12, 14) déterminent respectivement une différence entre la première et la deuxième heure locale (78), et
- le premier appareil de commande (12) pilote le premier actionneur local (32, 34) en fonction de la différence, et le deuxième appareil de commande pilote le deuxième actionneur local (34') en fonction de la différence.

14. Programme informatique, comprenant du code programme qui est stocké sur un support de données et est réalisé pour exécuter un procédé de commande d'une installation automatisée selon la revendication 13, l'installation automatisée possédant un temporisateur (18) et une pluralité d'appareils de commande (12, 14, 16, 18) répartis dans l'espace qui sont reliés les uns aux autres par un réseau de communication (20) et comportent au moins un premier appareil de commande (12) et un deuxième appareil de commande (14), le premier appareil de commande (12) possédant une première horloge locale (42) et exécutant de manière cyclique un nombre de premières tâches de commande (48, 52, 54) qui pilotent au moins un premier actionneur local (32, 34), le deuxième appareil de commande (14) possédant une deuxième horloge locale (42') et exécutant de manière cyclique un nombre de deuxièmes tâches de commande (50, 56, 58) qui pilotent au moins un deuxième actionneur local (34'), dans lequel le premier et le deuxième appareil de commande (12, 14) possèdent respectivement un service de synchronisation (44) qui synchronise l'horloge locale (42, 42') respective sur une horloge de référence (46) commune, dans lequel le temporisateur (18) envoie à plusieurs reprises un message de déclenchement (64) au premier et au deuxième appareil de commande (12, 14), et le procédé comprenant les étapes selon la revendication 13 étant exécuté si le code programme est exécuté sur le premier et sur le deuxième appareil de commande.
